# EUROPEAN PATENT SPECIFICATION

(11) **EP 0 655 891 B1**
(45) Date of publication and mention of the grant of the patent: **29.12.1997**
(21) Application number: 94912631.2
(22) Date of filing: 15.04.1994
(51) Int. Cl.: A23N 15/00

(54) **CORE REMOVAL APPARATUS**
MASCHINE ZUM ENTFERNEN DES KERNGEHÄUSES
APPAREIL D'EXTRACTION DU TROGNON

(30) Priority: 06.05.1993 GB 9309290
(43) Date of publication of application: 07.06.1995
(73) Proprietor: AEM MACHINERY LIMITED, Grimsby, South Humberside DN31 3AE (GB)
(72) Inventor: ELLIS, Anthony George, Grimsby, South Humberside DN33 1EH (GB)
(74) Representative: Harrison, Ivor Stanley
(86) International application number: GB9400804
(87) International publication number: WO9426134

(56) References cited:
- EP-A- 0 352 077
- EP-A- 0 552 902
- GB-A- 2 213 045
- US-A- 4 241 096

## Description

This invention relates to apparatus for the automated removal of the core from items of produce, in particular from cauliflowers or calabrese, to enable the edible portions thereof to be collected. For convenience throughout this specification, a distinction is drawn between the core and the edible portions of produce; in practice, the entire produce is edible, the core typically being used in the preparation of pickles and the like. The term "edible portions" should be taken to mean those parts which are suitable to be eaten as they are, optionally following cooking, and the term "core" should be taken to mean those parts which, although edible, require farther and separate processing.

Apparatus for automated removal of the cores from items of produce and having the features set forth in the preamble of claim 1 herein is known from GB-A-2213045.

European patent application no. EP-A 0352077 also describes apparatus for core removal, in which the item of produce is supported in an apertured tray with the core oriented downwardly and exposed to a cutter blade through the aperture, such that the blade cuts away the core and closes the aperture, thus allowing the core to drop away under gravity while retaining the edible portion in the tray. One problem with such apparatus, however, is that it is not always possible to support the produce sufficiently firmly that the cutter blade does not dislodge it. It is accordingly an object of the present invention to provide core removal apparatus which does not suffer from this disadvantage.

According to the present invention, apparatus for removal of the core from an item of produce and for separation of the edible portion therefrom comprises a conveyor with produce-support means disposed thereon, cutter means, a produce loading station where produce to be cut is loaded onto said produce support means, a collection station for cores, a collection station for edible portions, and a cutting station between said produce loading station and said collection station, where said produce is cut by the cutter means to remove said cores from said edible portions, characterised in that said conveyor constitutes a lower conveyor and said apparatus further comprises an upper conveyor with the cutter means disposed thereon and is constructed such that said upper and lower conveyors are arranged in confronting spaced-apart relationship as the respective cutter means and produce support means pass in mutual registration through the cutting station.

The lower conveyor has an upper-facing working portion which is preferably substantially flat and comprises a bed over which are arranged to pass a succession of produce-support dishes connected by elongate flexible elements such as chains which form an endless conveyor passing around end rollers at least one of which is driven. At least one of the conveyors is preferably height-adjustable; for example, the lower conveyor bed may be rendered height-adjustable by being raised at one end about a lateral pivot axis at or towards the other end by means of a mechanical adjuster such as a pivotable cam, to vary the spaced-apart distance between the cutter means and produce-support means according to the size and variety of the produce. The conveyors may include tensioning devices, as already known, to take up any slack in the conveyors.

The cutter means preferably comprise cooperating semi-circular jaw elements which constitute cutter blades and are mounted for pivotable movement towards each other, from an open to a closed condition, in the cutting mode. The cutting edges of the blades are preferably formed obliquely as cutter lobes at the lower end of respective half cylinders which are pivotably linked together by side bracket members, whereby in the open condition the half cylinders together constitute a cylindrical housing with the edges of the lobes constituting cutting edges which close together in the cutting mode as the upper ends of the half cylinders are pivoted away from each other. In the open condition, the lobes are positioned on opposite sides of an item of produce, preferably held core-uppermost in a produce support means, as the produce support means approaches the cutting station, in readiness to close together, thereby cutting into the produce and excising the core therefrom, as the produce-support means and cutter means proceed through the cutting station. Preferably, the diameter of the cylindrical housing is considerably oversize in relation to the produce, whereby the arc of movement of the cutter blades is relatively flat during its passage through the produce, thereby minimising downwards force on the produce and minimising pressure damage to the edible portion. The cutter means may be removably attached to the upper conveyor, whereby cutters of different size may be selectively used according to the nature of the produce.

Actuation of the blades may be by means of operating arms which are engaged by cam tracks as the cutter means approaches amd passes through the cutting station; the cam profile of the cam tracks may be such as to vary the closing speed of the cutter blades, preferably such that the initial closing speed is relatively slow and the final closing speed is relatively fast, whereby minimum downward pressure is applied to the produce in the initial stage of the cutting stroke but more cutting force is applied at the end of the cutting stroke, whereby to effect a clean and complete excision of the core. The operating arms are preferably biassed into engagement with the cam tracks or the arrangement of the cam tracks is such that the operating arms are constrained in engagement therewith.

Although the respective conveyors may be arranged to advance in indexed stages, it is preferred that they advance continuously. In use, items of produce are placed, preferably core upwards, in the advancing produce-support means and, the produce having passed through the cutting station, the edible portions are allowed to fall from the support means into a suitable container as the support means are inverted over the end conveyor rollers. The excised cores are retained by the closed cutter blades until they are discarded at the discard station, either by falling away from the cutter blades as they are inverted or by causing the cutter blades to open over a discharge conveyor or receptacle.

The upstream end of the upper conveyor carrying the core cutter means is preferably disposed at a converging angle with the lower conveyor as they approach the core cutting station, whereby successive cutter means gradually descend on produce items advancing on the produce-support means, the pivotable lobes of the cutter cylinder becoming positioned on either side of the item in readiness for the cutting stroke.

The produce-support means preferably comprise blocks having conically-dished inner surfaces, whereby the produce items are supported stably and centrally as they advance towards and through the cutting station in registration with the cutter means. The blocks are preferably formed from a high-density plastics material. It will be appreciated that, in the cutting station, the produce as thus supported is incapable of being dislodged under the influence of the cutter blades.

Embodiments of the invention will now be described by way of example with reference to the accompanying drawings, of which
Figure 1 is a side elevational diagram of a cauliflower- or calabrese-coring machine;
Figure 2 shows the cutter and produce support parts of the machine in more detail, the cutters being in the open condition;
Figure 3 is a plan view of the lower run of the cutter conveyor;
Figure 4 is a plan view of the upper run of the cutter conveyor; and
Figure 5 shows the height-adjustment mechanism.

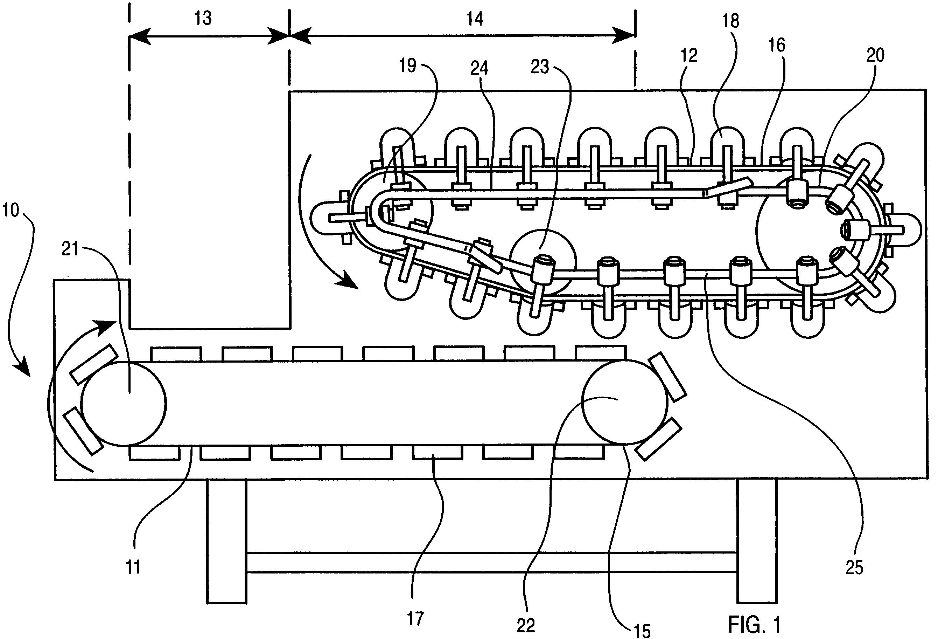

With reference to Figure 1, a coring machine generally indicated 10 includes an endless produce conveyor 11 and an endless cutter conveyor 12, the cutter conveyor 12 being disposed above the produce conveyor 11. The conveyors 11, 12 are longitudinally offset with respect to one another, giving rise to a produce loading station 13 where the cutter conveyor 12 is not immediately above the produce conveyor 11, and a cutting station 14 where the cutter conveyor 12 initially converges with the produce conveyor 11 to a pre-selected height dependent on the nature of the produce, and thereafter proceeds parallel thereto, where the produce is cut in a manner which will be described below. The machine also includes a discharge station 15 for the edible portions of the produce material and a discharge station 16 for the cores.

The produce conveyor includes a succession of spaced-apart produce support dishes 17 and the cutter conveyor includes a succession of cutter assemblies 18, similarly spaced apart; the conveyors move in the direction of the arrows at the same linear speed with adjacent produce support dishes 17 and cutter assemblies 18 in registration as they pass through the cutting station 14. The endless conveyor elements, conveniently chains, pass around respective end sprockets 19, 20 (for the cutter conveyor) and 21, 22 (for the produce conveyor). A pulley or roller 23 is provided in the cutter conveyor for determining the convergency of the cutter conveyor with the produce conveyor. Sprockets 20 and 22 are driven to advance the conveyors.

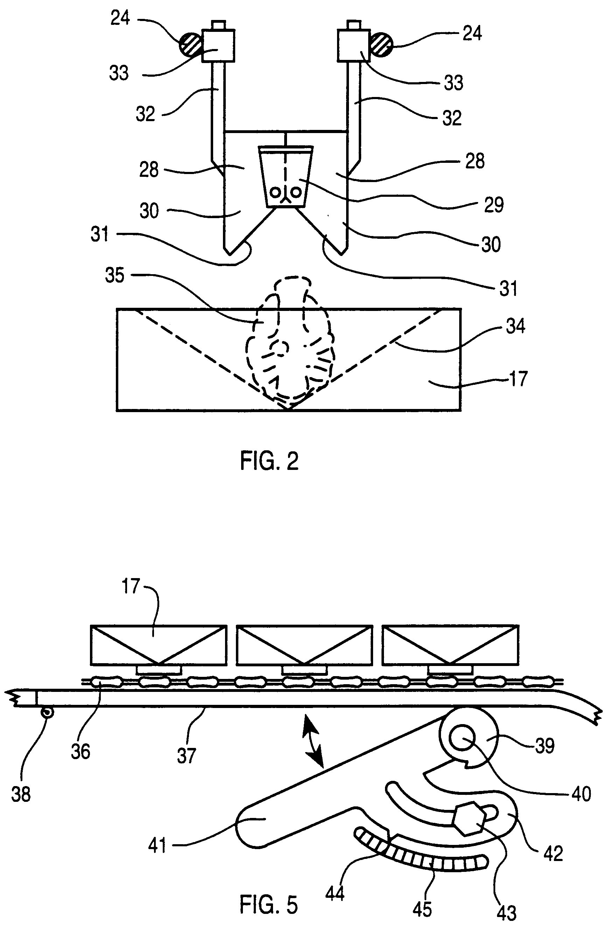

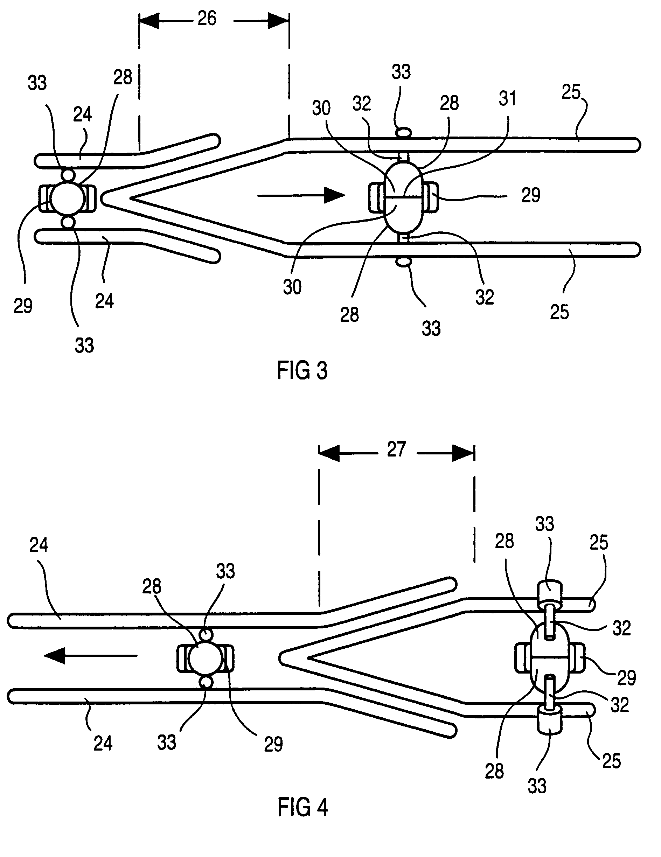

A cam track associated with the cutter conveyor 12 is composed of rails 24 and rails 25, shown more clearly in Figures 3 and 4. The cam rails are disposed in parallel, side-by-side spaced apart relationship; the rails 24 are relatively close together and rails 25 are relatively further apart. The cam tracks are engaged by the arms of the cutter assemblies 18, as described in more detail with reference to Figure 2, whereby the arms engage the insides of rails 24, to maintain the cutters open, and the outsides of rails 25, to maintain the cutters closed. Transition zones 26 and 27 provide for transfer of the arms from, respectively, rails 24 to 25 and rails 25 to 24. At the transition zones, the ends of the rails 24 diverge and the ends of the rails 25 converge; the converging/diverging rails define a gap between them by virtue of which the arms of the cutter assemblies are constrained to adopt the appropriate inside or outside position on moving in the direction indicated by the arrows.

With reference to Figure 2, each cutter assembly carried by the cutter conveyor includes a substantially cylindrical cutter element composed of a pair of half-cylinders 28 pivotably connected together by means of pivot brackets 29, which also serve to attach the cutter assembly to the conveyor. The lower wall of each half-cylinder 28 has an inwardly-facing sloping edge which defines a lobe 30 having a cutting edge 31. The lobes 30 face one another such that the apical portions thereof are at the furthest distance apart. An operating arm 32 is attached to each respective half-cylinder 28 on the outside thereof and has a cam follower 33 in the form of a roller which cooperates with the cam track (rails 24, as shown).

Still referring to Figure 2, each produce support dish 17 carried by the produce conveyor 11 has an internal conical profile 34 which, in use, serves to maintain an item of produce (shown in dashed outline at 35) in the desired position, whereby it is located between and spaced from the cutter lobes 30 as the produce and cutter conveyors converge towards the cutting station.

Referring now to Figure 5, the dishes 17, preferably formed from profiled polypropylene blocks, are attached in known manner to chains 36 which run immediately above a conveyor bed 37 which is pivotable about a lateral axis 38. Below the bed 37 is a cam device which adjusts the height of the bed with respect to the distance between a produce support dish 17 and a cutter assembly 18. The cam device comprises a snail cam head 39 which is pivotably mounted about eccentric axis 40; the cam surface bears on the lower surface of the bed 37, pivot movement being controlled by operating lever 41. A curved limb 42 extends from the lever and has an arcuate slot formed therein, in which is disposed a lock bolt and nut 43 for locking the cam head in a desired position. The limb 42 also has a pointer 44 on its lower edge which allows the setting of the cam to be determined by reading against a graduated scale 45.

In use, the height of the conveyor bed is adjusted, if necessary, by means of the cam device and is held in position by the lock bolt and nut 43. The machine is activated and the produce conveyor 11 and the cutter conveyor 12 advance in the directions shown by the respective arrows in Figure 1. Produce is placed core uppermost in the dishes 17 at the loading station 13. As the conveyors converge, each item of produce becomes positioned between the lobes of the half-cylinders 28 of a respective cutter assembly 18. As the produce support dish and cutter assembly move in registration through the cutting zone, the cam followers transfer at transition zone 26 from the insides of the cam rails 24 to the outsides of the rails 25 and, as the rails 25 at transition zone 26 diverge, they force the arms 32 to splay outwardly which in turn causes the lobes 30 to pivot towards one another (Figure 3), cutting through the produce from each side until the cutting edges 31 are in abutting relationship and have excised the upwardly facing core. The edible portions of the produce remain in the dish 17 until they reach the discharge station 15 where they are discharged and collected. The cores remain held between the lobes 30 until they are inverted as they pass around sprocket 20, allowing the core to fall under gravity to a core discharge conveyor (not shown) at core discharge station 16. In the above description, the core may include a part of the stalk.

Following the discharge station 16, the cutter assemblies 18 reach the transition zone 27 between rails 25 and 24 (Figure 4), at which the arms transfer from the outsides to the insides of the rails, thereby re-opening the cutters in readiness for the next cutting operation.

The inventive apparatus provides simple and trouble-free operation which is readily adjusted according to the size of the produce, its variety (for example calabrese or cauliflower) and the requirements of the user; the florets are produced with minimum pressure damage or bruising to their sensitive outer areas.

Although the invention has been particularly described with reference to the removal of cores from vegetables such as cauliflowers or calabrese, it may also be used for other vegetables including cabbages and lettuce, the latter being required to be supplied as loose leaves, optionally shredded, for use in burgers and other items of "fast food", by using cutting cylinders of different sizes. Thus, it has been found that a cutting cylinder of diameter 114mm is suitable for cauliflower and calabrese whereas a cylinder of diameter 60mm is suitable for cabbage and lettuce. The ability to adjust the height of the bed of the produce conveyor, and hence the position at which the cutter blades impinge on the produce, renders the apparatus when fitted with a cutter cylinder of a given size to be adjusted according to the actual size of the produce or the required size of the florets or other wanted produce parts.

The invention also includes a method of removing cores from items of produce using the apparatus of the invention, the method comprising supporting each item on a produce support means disposed on a lower conveyor and advancing the conveyor in registration with cutter means disposed on an upper conveyor through a cutting station in which the cutter means operates to separate the core from the edible portions of the produce, and removing the cores and the edible portions at respective removal stations downstream of the cutting station.

## Claims

1. Apparatus for the removal of the core from an item of produce and for separation of the edible portion therefrom, the apparatus comprising
- a conveyor (11),
- produce support means (17) disposed on said conveyor,
- cutter means (18),
- a produce loading station (13) where produce to be cut is loaded onto said produce support means,
- a collection station for cores (16),
- a collection station for edible portions (15), and
- a cutting station (14) between said produce loading station and said collection station where said produce is cut by the cutter means to remove said cores from said edible portions,
characterised in that said conveyor constitutes a lower conveyor and said apparatus further comprises an upper conveyor (12) with the cutter means (18) disposed thereon and is constructed such that said upper and lower conveyors are arranged in confronting spaced-apart relationship as the respective cutter means (18) and produce support means (17) pass in mutual registration through the cutting station (14).

2. Apparatus according to Claim 1, wherein the cutter means comprise cooperating semi-circular cutting blades (28).

3. Apparatus according to Claim 2, wherein the cutter means comprise half-cylinders (28) which are pivotably linked together by side bracket members (29), the lower ends of said half-cylinders forming cutter lobes (30) with oblique cutting edges (31).

4. Apparatus according to any preceding claim, wherein the apparatus includes a longitudinally-mounted cam track (24, 25) and the cutter means include actuating arms (32) which cooperatively engage the cam track, whereby lateral displacements in the run of the cam track cause the cutter means to perform a cutting or a return movement.

5. Apparatus according to Claim 4, wherein in the cutting station (14) the upper conveyor has a portion which converges towards the lower conveyor whereby produce to be cut is positioned between the cutter means before the cutting edges close together in a cutting movement.

6. Apparatus according to any preceding claim, wherein at least one of the conveyors (11, 12) is height adjustable.

7. Apparatus according to Claim 6, wherein the lower conveyor (11) is height adjustable and is pivotable about a lateral axis at one end thereof, the other end being raisable and lowerable by means of a snail cam (39).

8. Apparatus according to any preceding claim, wherein the conveyors include tensioning devices.

9. Apparatus according to any preceding claim, wherein the produce support means (17) have an internal conical concave profile.

10. Apparatus according to any preceding claim, the apparatus comprising a lower conveyor (11) including a succession of longitudinally spaced apart produce support means (17), an upper conveyor (12) including a succession of longitudinally spaced apart produce cutter assemblies (18), the produce support means and produce cutter assemblies being spaced apart to an equivalent extent; a cam track (24, 25) associated with the upper conveyor and comprising laterally-distanced parallel rails; each cutter assembly comprising cutter elements formed as cooperating pivotally-connected half cylinders (28) including lower cutter lobes (30) having confronting oblique cutting edges (31) which close together in a cutting movement as the half-cylinders pivot away from each other, the half-cylinders including upwardly-extending operating arms (32) which engage the cam rails on the outsides or insides thereof to effect the cutting movement, the apparatus including a produce loading station (13), a produce cutting station (14) and removal stations for core (16) and edible portions (15) respectively, the produce support means and the cutter assemblies being arranged to pass in registration through the cutting station and the cam rails being adapted to close said cutting edges as the cutter assemblies and produce support means pass through the cutting station.

11. A method of removing cores from items of produce using the apparatus as claimed in Claim 1, the method comprising supporting each item on a produce support means (17) disposed on a lower conveyor (11) and advancing the conveyor in registration with cutter means (18) disposed on an upper conveyor (12) through a cutting station (14) in which the cutter means operates to separate the cores from the edible portions of the produce, and removing the cores and the edible portions at respective removal stations (16, 15) downstream of the cutting station.

## Patentansprüche

1. Vorrichtung zum Entfernen der Kerne aus Gemüsefrüchten sowie zur Trennung des eßbaren Teils von ihnen mit
- einem Förderer (11),
- Aufnahmen (17) für die Gemüsefrüchte auf dem Förderer,
- Schneidvorrichtungen (18),
- einer Ladestation (13), in der die aufzuschneidenden Gemüsefrüchte in Aufnahmen eingebracht werden,
- einer Sammelstation (16) für die Kerne,
- eine Sammelstation für die eßbaren Teile (15) und
- einer Schneidstation (14) zwischen der Lade- und der Sammelstation, wo jede Gemüsefrucht von der Schneideinrichtung aufgeschnitten wird, um die Kerne von den eßbaren Teilen zu trennen,
dadurch gekennzeichnet, daß der Förderer ein Unterförderer ist und die Vorrichtung weiterhin einen Oberförderer (12) aufweist, auf dem die Schneidvorrichtungen (18) angeordnet sind, wobei der Aufbau derart ist, daß der Unter- und der Oberförderer beabstandet einander zugewandt sind, während die Schneidvorrichtungen (18) und die Aufnahmen (17) aufeinander ausgerichtet die Schneidstation (14) durchlaufen.

2. Vorrichtung nach Anspruch 1, bei der die Schneidvorrichtungen zusammenwirkende halbkreisförmige Klingen (28) aufweisen.

3. Vorrichtung nach Anspruch 2, bei der die Schneidvorrichtungen Halbzylinder (28) aufweisen, die mit seitlichen Haltern schwenkbar miteinander verbunden sind, wobei die unteren Enden der Halbzylinder Klingen (30) mit schrägverlaufenden Schneiden (31) bilden.

4. Vorrichtung nach einem der vorgehenden Ansprüche, bei der eine in Längsrichtung montierte Steuerspur (24, 25) vorgesehen ist und die Schneidvorrichtung Betätigungsarme (32) aufweist, die betrieblich an der Steuerspur anliegen, wobei bei einer seitliche Auslenkung im Verlauf der Steuerspur die Schneidvorrichtungen eine Schneid- oder eine Rücklaufbewegung ausführen.

5. Vorrichtung nach Anspruch 4, bei der die Schneidstation (14) im Oberförderer einen Bereich aufweist, der zum Unterförderer hin konvergiert und mit dem aufzuschneidende Gemüsefrüchte zwischen den Schneidvorrichtungen positioniert werden, bevor die Schneiden sich zu einer Schneidbewegung schließen.

6. Vorrichtung nach einem der vorgehenden Ansprüche, bei der mindestens einer der Förderer (11, 12) höhenverstellbar angeordnet ist.

7. Vorrichtung nach Anspruch 6, bei der der Unterförderer (11) höhenverstellbar und um eine Querachse an einem Ende desselben schwenkbar angeordnet ist, wobei das andere Ende mittels einer Exzenterscheibe (39) heb- und senkbar ist.

8. Vorrichtung nach einem der vorgehenden Ansprüche, bei der die Förderer Spanneinrichtungen aufweisen.

9. Vorrichtung nach einem der vorgehenden Ansprüche, bei der die Aufnahmen (17) innen konisch konkav ausgestaltet sind.

10. Vorrichtung nach einem vorgehenden Anspruch mit einem Unterförderer (11) mit einer Folge längsbeabstandeter Aufnahmen (17) und einem Oberförderer (12) mit einer Folge von längsbeabstandeten Schneidvorrichtungen (18), wobei die Aufnahmen und die Schneidvorrichtungen gleichermaßen beabstandet sind, mit einer dem Oberförderer zugeordneten Steuerspur (24, 25) mit seitlich beabstandeten parallelen Schienen, wobei jede Schneidvorrichtung Schneidelemente aufweist, die als zusammenwirkende und schwenkbar miteinander verbundene Halbzylinder (28) mit unteren Klingen (30) mit einander zugewandten schrägen Schneiden (31) ausgebildet sind, die sich in einer Schneidbewegung schließen, wenn die Halbzylinder voneinander hinwegschwenken, und wobei weiterhin die Halbzylinder aufwärts vorstehende Betätigungsarme (32) aufweisen, die an den Steuerschienen innen oder außen anliegen, um die Schneidbewegung auszuführen, und schließlich mit einer Ladestation (13), einer Schneidestation (14) und einer Station, in der die Kerne (16) und die eßbaren Teile (15) abgeführt werden, wobei die Aufnahmen und die Schneideinrichtungen so angeordnet sind, daß sie die Schneidstation aufeinander ausgerichtet durchlaufen und während dieses Durchlaufs die Steuerschienen die Schneiden schließen.

11. Verfahren zum Entfernen von Kernen aus Gemüsefrüchten unter Verwendung einer Vorrichtung nach Anspruch 1, wobei man die Gemüsefrüchte jeweils auf eine Aufnahme (17) ablegt, die auf einem Unterförderer (11) befestigt ist, den Förderer in Ausrichtung mit auf einem Oberförderer (12) angeordneten Schneidvorrichtungen (18) durch eine Schneidstation (14) führt, in der die Schneidvorrichtungen betrieblich die Kerne von den eßbaren Teilen der Gemüsefrüchte trennen, und dann die Kerne und die eßbaren Teile in zugeordneten Stationen (16, 15) laufabwärts der Schneidstation abführt.

## Revendications

1. Appareil pour enlever le trognon d'un produit et pour en séparer la partie comestible, l'appareil comprenant :
- un transporteur (11) ;
- des moyens supports de produits (17) disposés sur ledit transporteur ;
- des moyens de couteau (18) ;
- un poste de chargement (13) de produits où est chargé le produit à couper sur lesdits moyens supports de produits ;
- un poste de collecte (16) pour les trognons ;
- un poste de collecte (15) pour les parties comestibles ; et
- un poste de coupe (14) situé entre ledit poste de chargement de produits et ledit poste de collecte, où ledit produit est coupé par les moyens de couteau pour enlever lesdits trognons desdites parties comestibles,
caractérisé en ce que ledit transporteur est un transporteur inférieur et en ce que ledit appareil comprend en outre un transporteur supérieur (12) sur lequel sont disposés les moyens de couteau (18) et est construit de telle sorte que lesdits transporteurs, supérieur et inférieur, sont disposés en vis-à-vis à une certaine distance l'un de l'autre lorsque les moyens de couteau (18) et les moyens supports de produits (17) passent en coïncidence mutuelle à travers le poste de coupe (14).

2. Appareil selon la revendication 1, dans lequel les moyens de couteau comprennent des lames de coupe semi-circulaires coopérantes (28).

3. Appareil selon la revendication 2, dans lequel les moyens de couteau comprennent des demi-cylindres (28) qui sont reliés l'un à l'autre de manière pivotante par des éléments supports latéraux (29), les extrémités inférieures desdits demi-cylindres formant des lobes de coupe (30) avec des bords de coupe obliques (31).

4. Appareil selon l'une des revendications précédentes, dans lequel l'appareil comprend un chemin de cames longitudinal (24, 25) et les moyens de couteau comprennent des bras d'actionnement (32) qui coopèrent avec le chemin de cames, d'où il résulte que des déplacements latéraux dans le tracé du chemin de cames provoquent un mouvement de coupe ou un mouvement de retour des moyens de couteau.

5. Appareil selon la revendication 4, dans lequel, au niveau du poste de coupe (14), le transporteur supérieur a une portion qui converge vers le transporteur inférieur, d'où il résulte que le produit à couper est positionné entre les moyens de couteau avant que les bords de coupe ne se referment l'un sur l'autre en un mouvement de coupe.

6. Appareil selon l'une des revendications précédentes, dans lequel l'un au moins des transporteurs (11, 12) est réglable en hauteur.

7. Appareil selon la revendication 6, dans lequel le transporteur inférieur (11) est réglable en hauteur et peut pivoter autour d'un axe transversal au niveau d'une de ses extrémités, l'autre extrémité pouvant être levée et abaissée au moyen d'une came (39) en forme de colimaçon.

8. Appareil selon l'une des revendications précédentes, dans lequel les transporteurs comprennent des dispositifs de tension.

9. Appareil selon l'une des revendications précédentes, dans lequel les moyens supports de produits (17) ont un profil interne concave conique.

10. Appareil selon l'une des revendications précédentes, l'appareil comprenant un transporteur inférieur (11) comprenant une succession de moyens supports de produits (17) espacés les uns des autres dans le sens de la longueur, un transporteur supérieur (12) comprenant une succession d'ensembles de coupe de produits (18) espacés les uns des autres dans le sens de la longueur, les moyens supports de produits et les ensembles de coupe de produits étant espacés les uns des autres à un degré équivalent ; un chemin de cames (24, 25) associé au transporteur supérieur et comprenant des rails parallèles éloignés latéralement ; chaque ensemble de coupe comprenant des éléments de couteau sous forme de demi-cylindres (28) coopérants reliés de manière pivotante, comprenant des lobes de coupe inférieurs (30) ayant des bords de coupe obliques en vis-à-vis (31) qui se referment l'un sur l'autre en un mouvement de coupe lorsque les demi-cylindres pivotent en s'éloignant l'un de l'autre, les demi-cylindres comprenant des bras d'actionnement (32) s'étendant vers le haut qui coopèrent avec les rails de cames sur les extérieurs ou les intérieurs de ceux-ci pour effectuer le mouvement de coupe, l'appareil comprenant un poste de chargement (13) de produits, un poste de coupe (14) de produits et des postes d'enlèvement pour trognons (16) et parties comestibles (15) respectivement, les moyens supports de produits et les ensembles de coupe étant disposés pour passer en coïncidence à travers le poste de coupe et les rails de cames étant adaptés pour refermer lesdits bords de coupe lorsque les ensembles de coupe et les moyens supports de produits passent à travers le poste de coupe.

11. Procédé pour enlever les trognons de produits naturels en utilisant l'appareil selon la revendication 1, procédé dans lequel on supporte chaque produit sur un moyen support de produit (17) disposé sur un transporteur inférieur (11) et faire avancer le transporteur en coïncidence avec des moyens de coupe (18) disposés sur un transporteur supérieur (12) à travers un poste de coupe (14) dans lequel les moyens de coupe séparent les trognons des parties comestibles du produit, et on enlève les trognons et les parties comestibles en des postes d'enlèvement respectifs (16, 15) en aval du poste de coupe.
